# EUROPÄISCHE PATENTANMELDUNG

(11) **EP 2 982 530 A1**
(43) Veröffentlichungstag der Anmeldung: **10.02.2016**
(21) Anmeldenummer: 15000839.9
(22) Anmeldetag: 21.03.2015
(51) Int. Cl.: B60H 1/08, B60H 1/00

(54) **FAHRZEUG MIT EINER EINRICHTUNG ZUM KÜHLEN UND HEIZEN EINES FAHRGASTRAUMS**

(30) Priorität: 05.08.2014 DE 102014011684
(71) Anmelder: MAN Truck & Bus AG, 80995 München (DE)
(72) Erfinder: Kargl, Michael, 81245 München (DE)

(57) **Zusammenfassung**

Die Erfindung betrifft ein Fahrzeug, vorzugsweise einen Omnibus, mit einer Einrichtung zum Kühlen und Heizen eines Fahrgastraums des Fahrzeugs. Die Einrichtung (8) zum Kühlen und Heizen eines Fahrgastraums (7) des Fahrzeugs umfasst eine Leitungsanordnung (2), die an einer Innenfläche (5) des Fahrgastraums (7) angeordnet ist und zum Kühlen oder Heizen der Innenfläche (5) von einem flüssigen Energieträger durchströmbar ist; und einen Energieträgerkreislauf (1), der eingerichtet ist, den flüssigen Energieträger wahlweise zu erwärmen oder zu kühlen. Hierbei ist die Leitungsanordnung (2) als Teil des Energieträgerkreislaufs (1) ausgebildet. Der Energieträgerkreislauf (1) ist zum Erwärmen des Energieträgers über einen Flüssig/flüssig-Wärmetauscher (20) mit einem Heizkreislauf (17) und zum Kühlen des Energieträgers über einen Verdampfer (12) mit einem Kältemittelkreislauf (10) koppelbar.

## Beschreibung

Die Erfindung betrifft ein Fahrzeug, vorzugsweise einen Omnibus, mit einer Einrichtung zum Kühlen und Heizen eines Fahrgastraums des Fahrzeugs.

Bei den aus der Praxis bekannten Heiz- und Kühlvorrichtungen bzw. Klimaanlagen von Fahrzeugen erfolgen die Heizung und Klimatisierung relativ unabhängig voneinander. Die Heizung des Innenraums erfolgt durch Erwärmung der Luft. Diese wird mit Hilfe von vor oder hinter Ventilatoren angeordneten Wärmetauschern erwärmt, die von aufgeheizter Motorkühlflüssigkeit durchströmt werden. Vereinzelt gibt es auch elektrische Heizelemente, die aufgrund des hohen Energieverbrauchs aber möglichst vermieden werden. Die Kühlung des Innenraums erfolgt durch Kühlung der Luft über eine Klimaanlage. Hier wird der Luft über einen geschlossenen Kältemittelkreislauf die Wärme entzogen. Im Verdampfer der Klimaanlage verdampft das Kältemittel und nimmt Wärme aus der Innenraumluft auf. Die Regulierung der thermischen Behaglichkeit der Insassen erfolgt ausschließlich über das Temperieren der Luft über separate Wärmetauscher, je nachdem, ob die Luft gekühlt oder geheizt werden soll.

Die so erwärmte oder gekühlte Luft wird über ein Gebläse in den Fahrgastraum geblasen, wodurch sich im Fahrgastraum ein Luftzug ergibt, der häufig als störend empfunden wird. Nachteilig ist ferner die mangelnde Energieeffizienz, da Luft ein schlechter Energieträger ist. Die Energieeffizienz wird ferner durch den notwendigen hohen Luftaustausch beeinträchtigt, da Innenluft mit einer gewissen Temperaturdifferenz zur Außenluft das Fahrzeug verlässt und Frischluft mit Energieaufwand wieder temperiert werden muss. Je höher die Temperaturdifferenz zwischen Innen- und Außenluft und je höher die Luftwechselrate ist, desto größer ist der Energieverlust. Bei Omnibussen empfiehlt die VDV230 zur Erzielung der geforderten Behaglichkeit den Fahrzeuginnenraum beispielsweise mit einer Frischluftmenge von ca. 15m³/h pro Person durchzuspülen. Die Komfort-Einbußen entstehen ferner durch trockene Luft, beispielsweise bei sehr trockener erhitzter Luft im Winter oder verursacht durch die Klimaanlage.

In der DE 88 09 007 U1 wird zur Vermeidung der als störend empfundenen hohen Luftgeschwindigkeiten einer herkömmlichen Fahrzeugheizung vorgeschlagen, den Wärmetauscher einer Fahrzeugheizung als Strahlungs- und/oder Konvektionsheizer im Fahrgastraum in Form wenigstens eines Flächenelementes auszubilden. Nachteilig hieran ist, dass mit der vorgeschlagenen Strahlungsheizung keine Kühlung möglich ist bzw. eine separate Klimaanlage vonnöten ist, verbunden mit den vorgenannten Nachteilen.

Aus der DE 41 20 093 A1 ist ferner bekannt, auf den Innenflächen des Fahrgastraumes flächige Elemente vorzusehen, die von einem Heiz- und/oder Kühlmedium durchströmt werden und durch Strahlung und Konvektion das Raumklima des Fahrgastraumes beeinflussen, ohne jedoch anzugeben, wie ein effizienter Betrieb zur Bereitstellung der Heiz- und/oder Kühlfunktion ermöglicht werden kann.

Es ist somit eine Aufgabe der Erfindung, eine verbesserte Heiz- und Kühleinrichtung für den Fahrgastraum eines Fahrzeugs bereitzustellen, mit der Nachteile herkömmlicher Heiz- und Kühleinrichtungen vermieden werden können. Eine Aufgabe der Erfindung ist es insbesondere, eine Heiz- und Kühleinrichtung für den Fahrgastraum eines Fahrzeugs so auszubilden, dass eine störende Luftbewegung nicht auftritt und gleichzeitig ein energieeffizienter Heizund Kühlbetrieb ermöglicht wird.

Diese Aufgaben werden durch ein Fahrzeug mit einer Heiz- und Kühleinrichtung gemäß den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die Erfindung betrifft ein Fahrzeug, vorzugsweise ein Nutzfahrzeug, z. B. einen Omnibus, mit einer Einrichtung zum Kühlen und Heizen eines Fahrgastraums des Fahrzeugs. Erfindungsgemäß umfasst die Einrichtung zum Kühlen und Heizen eines Fahrgastraums des Fahrzeugs wenigstens eine Leitungsanordnung, die an wenigstens einer Innenfläche des Fahrgastraums angeordnet ist, vorzugweise in diese integriert ist und zum Kühlen oder Heizen der Innenfläche von einem flüssigen Energieträger durchströmbar ist. Die Einrichtung zum Kühlen und Heizen umfasst ferner einen Energieträgerkreislauf, der eingerichtet ist, den flüssigen Energieträger wahlweise zu erwärmen oder zu kühlen. Hierbei ist die Leitungsanordnung als Teil des Energieträgerkreislaufs ausgebildet, und der Energieträgerkreislauf ist zum Erwärmen des Energieträgers über einen Flüssig/flüssig-Wärmetauscher mit einem Heizkreislauf und zum Kühlen des Energieträgers über einen Verdampfer mit einem Kältemittelkreislauf koppelbar bzw. gekoppelt.

Gemäß allgemeinen Gesichtspunkten der Erfindung wird somit eine Strahlungsheizung bereitgestellt, mittels der eine oder mehrere Flächenelemente im Fahrgastraum wahlweise erwärmt oder gekühlt werden können, je nachdem, ob eine Heiz- oder Kühlfunktion gewünscht ist. Der notwendige Wärmeaustausch erfolgt primär über den Strahlungsaustausch des menschlichen Körpers mit den temperierten Innenflächen. Die Luft wird nur indirekt über die temperierte(n) Innenfläche(n) temperiert, so dass sich eine Wärmeübertragung durch Konvektion und eine Wärmeübertragung durch Wärmestrahlung überlagern. Eine Wärmeabgabe oder Wärmeaufnahme kann somit zu einem großen Teil mittels Strahlungsaustausch des Insassen mit den umgebenden Bauteilen stattfinden und nicht über eine Konvektion.

Ein besonderer Vorzug der Erfindung liegt somit darin, dass ein erhöhter Komfort für die Insassen im Fahrgastraum ermöglicht wird. Im Winter werden durch die Strahlungsheizung eine gesunde Strahlungswärme und ein besseres Raumklima ermöglicht, da die Luft im Vergleich zu herkömmlichen Gebläseheizungen nicht so trocken ist, kühler sein kann und somit einen höheren Sauerstoffanteil hat. Im Sommer kann eine unangenehm kalte Zugluft zum Klimatisieren vermieden werden, und der normale, nicht kühlungsbedingte Luftaustausch kann gezielt in größerer Entfernung zu Personen stattfinden.

Ein weiterer Vorteil ist, dass die Strahlungsheizung mit einer deutlich geringeren Vorlauftemperatur umsetzbar ist, so dass weniger Energie benötigt wird und auch die Energieverluste reduziert werden. Die Heizung bzw. Kühlung durch die temperierten Innenflächen ist vergleichsweise träge, so dass die Temperatur auch bei stillstehendem Fahrzeug über einen längeren Zeitraum auf dem gewünschten Niveau gehalten wird.

Da der Energieträgerkreislauf eingerichtet ist, den flüssigen Energieträger, der die zu temperierenden Innenflächen durchströmt, wahlweise zu erwärmen oder zu kühlen, können getrennte Kreisläufe für einen Kälte- und Wärmeträger vermieden werden. Dadurch sinken der Bauraumbedarf und der Kostenaufwand. Ferner kann auf weniger effiziente Luft/Flüssigkeit-Wärmetauscher zur Erwärmung des Energieträgers verzichtet verwendet, da nur Innenraumbauteile durch einen flüssigen Energieträger temperiert werden.

Der flüssige Energieträger kann ein Gemisch aus Wasser, versetzt mit einem Frostschutzmittel, sein, um einen Betrieb bei niedrigen Temperaturen sicherzustellen.

Die durch die Einrichtung zum Kühlen und Heizen temperierte Innenfläche kann als zumindest Teil der Seitenwand- und/oder Dach- und/oder Bodenverkleidung ausgebildet sein. Vorzugsweise sind sowohl die Seitenwände, die Dachvoute und eine Bodenfläche temperiert, so dass ein möglichst großflächiger Strahlungsaustausch mit den Fahrgästen ermöglicht wird.

Der Heizkreislauf kann einen von aufgeheizter Motorkühlflüssigkeit durchströmbaren Wärmetauscher umfassen, so dass Motorabwärme für die Heizfunktion wiederverwendet werden kann. Es besteht jedoch auch die Möglichkeit, eine Wärmepumpe oder einen elektrischen Heizer zur Erwärmung des Energieträgers zu verwenden.

Der Kältemittelkreislauf kann ferner einen Verdichter, einen Verflüssiger und ein Expansionsventil umfassen.

Ferner kann die Einrichtung zum Kühlen und Heizen eingerichtet sein, eine Vorlauftemperatur des Energieträgerkreislaufs mittels eines Thermostatventils zu regeln, wodurch ein einfacher und zugleich zuverlässiger Regelbetrieb ermöglicht wird.

Ferner ist es vorteilhaft, auf einer der Außenwand des Fahrzeugs zugewandten Seite der Leitungsanordnung eine wärmeisolierende Schicht anzuordnen, um die Verlustleistung an die Umgebung zu reduzieren.

Die Leitungsanordnung kann eine Kapillarrohrmatte umfassen, wodurch eine kompakte Bauweise und gleichzeitig besonders gleichmäßige Erwärmung bzw. Kühlung der Innenfläche ermöglicht werden. Die Erfindung ist hinsichtlich des konstruktiven Aufbaus der Leitungsanordnung der zu temperierenden Innenfläche jedoch nicht auf einen bestimmten Aufbau beschränkt. So können auch herkömmliche Leitungen und Rohre verwendet werden, die beispielsweise einen mäanderförmigen Verlauf aufweisen.

Die Erfindung betrifft ferner einen Omnibus, umfassend eine Einrichtung zum Kühlen und Heizen, wie hierin offenbart. Der Omnibus kann somit ausgeführt sein, zur Kühlung und zum Heizen des Fahrgastraums Teilflächen der Seitenwand- und/oder Dach- und/oder Bodenverkleidung, z. B. der Dachvouten oder der Unterseite der Gepäckablagen und/oder von anderen geeigneten Bauteilen im Innenraum mittels der Einrichtung zum Kühlen und Heizen zu temperieren.

Neben der beispielhaft hervorgehobenen Anwendung der Erfindung bei einem Omnibus kann das erfindungsgemäße Fahrzeug auch als Personenkraftwagen (PKW), Flugzeug oder Schienenfahrzeug ausgeführt sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht einer Heiz- und Kühlvorrichtung gemäß einer Ausführungsform der Erfindung; und
- Figur 2: eine schematische Ansicht einer temperierbaren Fahrgastrauminnenfläche gemäß einer Ausführungsform der Erfindung.

Gleiche oder funktional äquivalente Elemente sind in allen Figuren mit denselben Bezugszeichen bezeichnet.

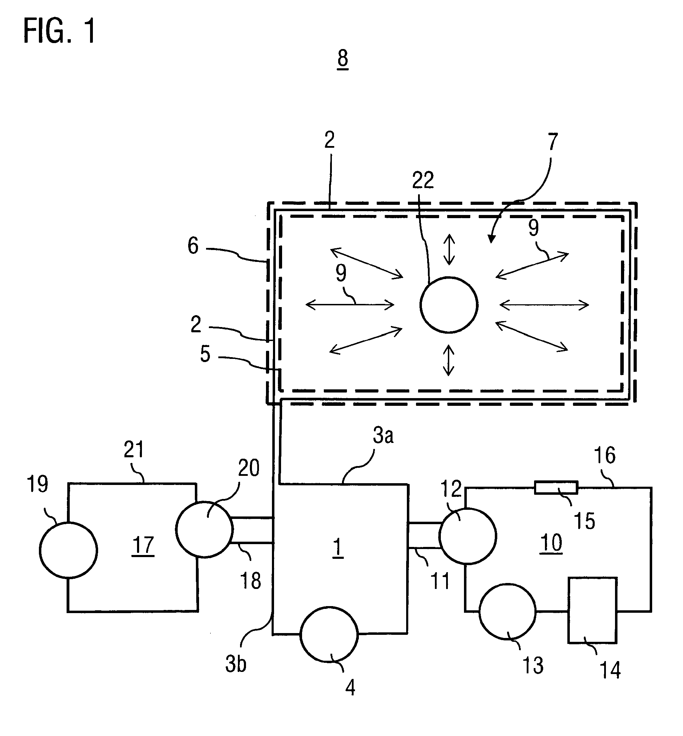

Figur 1 zeigt eine schematische Ansicht einer Heiz- und Kühlvorrichtung 8 gemäß einer Ausführungsform der Erfindung. Hierbei sind ein Fahrgastraum 7 eines Fahrzeugs, eine Fahrzeugaußenwand 6 und eine dem Fahrgastraum 7 zugewandte Innenfläche 5 des Fahrgastraums 7, z. B. eine Innenwand des Fahrzeugs, lediglich schematisch dargestellt. Das erfindungsgemäße Fahrzeug kann als Omnibus ausgebildet sein.

In eine Innenfläche 5 des Fahrgastraums 7 ist eine Leitungsanordnung 2 integriert, die im Betrieb von einem flüssigen Energieträger durchströmt wird, um auf diese Weise die Innenfläche 5 zu temperieren, d. h. wahlweise zu erwärmen oder zu kühlen. Die Leitungsanordnung 2 wird zum Fahrgastraum 7 von der Innenfläche 5 verdeckt und ist zwischen der Innenfläche 5 und der Fahrzeugaußenwand 6 angeordnet. Zur Aufnahme der Leitungsanordnung 2 kann die Innenfläche 5 doppelwandig ausgeführt sein.

Im Falle eines Omnibusses können mehrere derartige temperierbare Innenflächen 5 des Fahrgastraums 7 vorgesehen sein. Diese können zumindest als Teil der Seitenwandverkleidung, als Teil der Dachverkleidung bzw. der Dachvouten und/oder als Teil der Bodenverkleidung unterhalb der Fahrgastsitze und/oder unterhalb des Laufgangs ausgebildet sein bzw. in diese Verkleidungselemente integriert sein.

Jedes dieser mittels der integrierten Leitungsanordnung 2 temperierbaren Flächenelemente stellt ein Heiz- bzw. Kühlungselement dar. Der Strahlungsaustausch zwischen den temperierten Innenflächen 5 und den Insassen 22 ist mit den Pfeilen 9 gekennzeichnet.

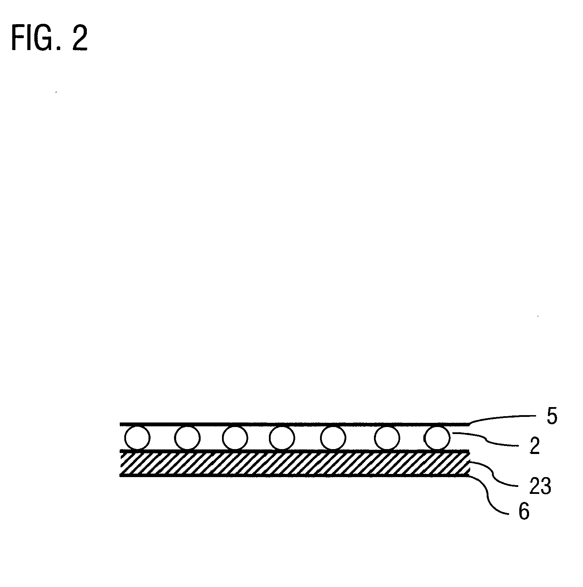

Der Aufbau dieser temperierbaren Flächenelemente ist in Figur 2 schematisch erläutert.

Zwischen der Innenfläche 5 und der fahrzeugäußeren Wand 6 verlaufen im Wesentlichen horizontal und parallel zueinander Leitungen 2, die im Betrieb von dem flüssigen Energieträger, z. B. Wasser mit Frostschutzmittel versetzt, durchströmt werden. Die Leitungen 2 können z. B. Polypropylenrohre und/oder Kapillarrohrmatten sein. Zwischen den Leitungen 2 und der Außenwand 6 ist eine Isolierung bzw. Dämmschicht 23 angeordnet.

Wie in Figur 1 dargestellt, ist die Leitungsanordnung 2 über Hin- und Rücklauf 3a, 3b mit dem restlichen Teil des Energieträgerkreislaufs 1 verbunden, in dem eine Umwälzpumpe 4 vorgesehen ist, die die Zirkulation des Energieträgers im Kreislauf 1 bewirkt und in dem der Energieträger wahlweise erwärmt oder gekühlt werden kann.

Hierzu ist der Energieträgerkreislauf 1 über Verbindungsleitungen 18 und einen Flüssig/flüssig-Wärmetauscher 20 mit einem Heizkreislauf 17 zum Erwärmen des Energieträgers koppelbar. Ferner ist der Energieträgerkreislauf 1 über Verbindungsleitungen 11 und einen flüssigkeitsbeaufschlagten Verdampfer 12 mit einem Kältemittelkreislauf 10 zum Kühlen des Energieträgers koppelbar. Der Heizkreislauf 17 umfasst einen von aufgeheizter Motorkühlflüssigkeit durchströmbaren Wärmetauscher 19 oder eine andere Wärmequelle zur Erwärmung der Flüssigkeit in der Leitung 21 des Heizkreislaufs 17. Der Kältemittelkreislauf 10 umfasst ferner einen Verdichter 13, einen Verflüssiger 14 und ein Expansionsventil 15, die in an sich bekannter Weise zur Ausbildung eines Kältemittelkreislaufs ausgeführt sind, um ein in der Kältekreislaufleitung 16 befindliches Kältemittel nach dem Verdampfen wieder zu verflüssigen.

Die Einrichtung 8 zum Kühlen und Heizen regelt eine Vorlauftemperatur des Energieträgerkreislaufs 1 mittels eines Thermostatventils (nicht gezeigt). Je nach vorgegebener Sollvorlauftemperatur wird entweder der Heizkreislauf 17 oder der Kühlmittelkreislauf 10 mit dem Energieträgerkreislauf 1 gekoppelt, um den Energieträger 3 im Energieträgerkreislauf 1 entweder durch den Flüssig/flüssig-Wärmetauscher 20 zu erwärmen oder durch den flüssigkeitsbeaufschlagten Verdampfer 12 zu kühlen.

Das Temperaturniveau ist im Vergleich zur herkömmlichen Heizung relativ niedrig, so dass ein energieeffizienterer Betrieb ermöglicht wird. Ventilatoren sind nicht erforderlich, so dass keine unangenehm hohen Luftgeschwindigkeiten und keine Lärmbelästigungen auftreten. Dieselben Flächenelemente werden somit zum Heizen bei kalten Außentemperaturen und zum Kühlen bei warmen Außentemperaturen verwendet. Haben die umgebenden Bauteile des Fahrgastraums 7 eine geringere Oberflächentemperatur als der menschliche Körper, können die Insassen 22 über Strahlungsaustausch Wärme abgeben. Der Körper wird gekühlt, und die thermische Behaglichkeit steigt. Haben die umgebenden Bauteile des Fahrgastraums 7 eine höhere Oberflächentemperatur als der menschliche Körper, können die Insassen 22 über Strahlungsaustausch Wärme aufnehmen.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Energieträgerkreislauf
- 2: Leitungsanordnung
- 3a, 3b: Versorgungsleitungen
- 4: Umwälzpumpe
- 5: Innenfläche
- 6: Außenwand
- 7: Fahrgastraum
- 8: Einrichtung zum Heizen und Kühlen
- 9: Wärme- bzw. Kältestrahlung
- 10: Kältemittelkreislauf
- 11: Verbindungsleitung
- 12: Flüssigkeitsbeaufschlagter Verdampfer
- 13: Verdichter
- 14: Verflüssiger
- 15: Expansionsventil
- 16: Leitung Kältemittelkreislauf
- 17: Heizkreislauf
- 18: Verbindungsleitung
- 19: Wärmequelle, z. B. Wärmetauscher
- 20: Flüssig/flüssig-Wärmetauscher
- 21: Leitung
- 22: Insassen
- 23: Isolierung

## Patentansprüche

1. Fahrzeug, vorzugsweise Nutzfahrzeug, mit einer Einrichtung (8) zum Kühlen und Heizen eines Fahrgastraums (7) des Fahrzeugs, welche umfasst:
eine Leitungsanordnung (2), die an einer Innenfläche (5) des Fahrgastraums (7) angeordnet ist und zum Kühlen oder Heizen der Innenfläche (5) von einem flüssigen Energieträger durchströmbar ist;
einen Energieträgerkreislauf (1), der eingerichtet ist, den flüssigen Energieträger wahlweise zu erwärmen oder zu kühlen, wobei die Leitungsanordnung (2) als Teil des Energieträgerkreislaufs (1) ausgebildet ist und wobei der Energieträgerkreislauf (1) zum Erwärmen des Energieträgers über einen Flüssig/flüssig-Wärmetauscher (20) mit einem Heizkreislauf (17) und zum Kühlen des Energieträgers über einen Verdampfer (12) mit einem Kältemittelkreislauf (10) koppelbar ist.

2. Fahrzeug nach Anspruch 1, **dadurch gekennzeichnet, dass** die Innenfläche (5) als zumindest Teil der Seitenwand- und/oder Dach- und/oder Bodenverkleidung ausgebildet ist.

3. Fahrzeug nach Anspruch 1 oder 2, **dadurch gekennzeichnet, dass** der Heizkreislauf (17) einen von aufgeheizter Motorkühlflüssigkeit durchströmbaren Wärmetauscher (19) umfasst.

4. Fahrzeug nach einem der vorhergehenden Ansprüche, **dadurch gekennzeichnet, dass** der Kältemittelkreislauf (10) ferner einen Verdichter (13), einen Verflüssiger (14) und ein Expansionsventil (15) umfasst.

5. Fahrzeug nach einem der vorhergehenden Ansprüche, **dadurch gekennzeichnet, dass** die Einrichtung (8) zum Kühlen und Heizen eingerichtet ist, eine Vorlauftemperatur des Energieträgerkreislaufs (1) mittels eines Thermostatventils zu regeln.

6. Fahrzeug nach einem der vorhergehenden Ansprüche, **dadurch gekennzeichnet, dass** auf einer der Außenwand (6) des Fahrzeugs zugewandten Seite der Leitungsanordnung (2) eine wärmeisolierende Schicht angeordnet (23) ist.

7. Fahrzeug nach einem der vorhergehenden Ansprüche, **dadurch gekennzeichnet,**
(a) **dass** die Leitungsanordnung (2) eine Kapillarrohrmatte umfasst,
(b) **dass** der flüssige Energieträger ein Gemisch aus Wasser und einem Frostschutzmittel ist.

8. Fahrzeug nach einem der vorhergehenden Ansprüche 2 bis 7, **dadurch gekennzeichnet, dass** das Fahrzeug als Omnibus ausgeführt ist, der eingerichtet ist, zur Kühlung und zum Heizen des Fahrgastraums (7) Teilflächen der Seitenwandund/oder Dach- und/oder Bodenverkleidung mittels der Einrichtung zum Kühlen und Heizen zu temperieren.
